# EUROPÄISCHE PATENTSCHRIFT

(11) **EP 2 236 845 B1**
(45) Veröffentlichungstag und Bekanntmachung des Hinweises auf die Patenterteilung: **09.01.2013**
(21) Anmeldenummer: 10153797.5
(22) Anmeldetag: 17.02.2010
(51) Int. Cl.: F16C 19/52, F16C 41/04

(54) **Antriebsanordnung**
Drive arrangement
Agencement d'entraînement

(30) Priorität: 03.04.2009 DE 102009002170
(43) Veröffentlichungstag der Anmeldung: 06.10.2010
(73) Patentinhaber: Robert Bosch GmbH, 70442 Stuttgart (DE)
(72) Erfinder: Lott, Thomas, 77815, Buehl (DE); Becker, Rainer, 67930, Beinheim (FR); Meier, Helmut, 77871, Renchen (DE); Bolz, Martin-Peter, 77815, Buehl (DE)

(56) Entgegenhaltungen:
- WO-A2-2010/035011
- US-A1- 2003 075 769

## Beschreibung

### Stand der Technik

Die vorliegende Erfindung betrifft eine Antriebsanordnung, sowie ein Verfahren zur Verhinderung des Eingrabens von Wälzkörpern in Laufringe von Wälzlagern einer Antriebsanordnung.

Bei Antriebsanordnungen, deren Wälzlager im Stillstand bzw. an einer Endposition aufgrund der einwirkenden Massenkräfte und/oder von Schwingungsbelastungen kontinuierlich auf der gleichen Stelle belastet werden, tritt in den Laufringen dieser Wälzlager ein Einlaufeffekt (sog. False brinelling) auf, wobei sich Wälzkörper in Laufringe eingraben können. Dies kann zu unerwünschten Stillstandsmarken führen. Dieser Einlaufeffekt hat eine deutlich geringere Lebensdauer und/oder eine unerwünschte Geräuschentwicklung dieser Lager zur Folge.

Aus der US 2003/0075769 A1 ist eine Antriebsanordnung gemäß dem Oberbegriff des Anspruches 1 bekannt.

### Offenbarung der Erfindung

Die erfindungsgemäße Antriebsanordnung mit den Merkmalen des Patentanspruchs 1 bzw. das Verfahren zur Verhinderung des Eingrabens von Wälzkörpem in Laufringe von Wälzlagern einer Antriebsanordnung mit den Merkmalen des Anspruchs 5 weisen demgegenüber den Vorteil auf, dass hierbei die Steuereinheit den Antrieb bei stillstehender, d. h. nicht rotierender Welle ansteuert bzw. aktiviert, um dessen Welle zusammen mit zumindest einem inneren Laufring des Wälzlagers um einen Drehwinkel weiterzudrehen. Dieser Drehwinkel kann vorzugsweise fest vorgegeben und immer gleich sein oder sich verändern. Hierdurch wird eine Relativposition zwischen den Wälzkörpern und den Laufringen des Wälzlagers verändert und ein Einlaufeffekt während des Stillstands des Wälzlagers aufgrund von Masse- und/oder Schwingungsbeanspruchungen dadurch verhindert, dass die Stillstandsposition und somit die Last über den Umfang der Laufringe auf unterschiedliche Positionen verteilt wird. Da die Aktivierung der Antriebsanordnung bei vollständigern Ruhezustand der Antriebsanordnung sowie während einem Einsatz, bei dem die Welle kurzzeitig stillsteht, erfolgen kann, können der Drehwinkel des Antriebs und somit der Drehwinkel der Welle durch die Ansteuerung verändert werden und dadurch der Beginn und das Ende einer Verstellbewegung phasenverschoben werden. Dadurch laufen die Wälzkörper auch während des normalen Einsatzes der Antriebsanordnung nicht immer im gleichen Bereich des Laufrings. Die Ansteuerung des Antriebs erfolgt durch die Steuereinheit nach Ablauf eines vorzugsweise immer gleich langen Zeitintervalls. Hierdurch wird ein zyklisches Weiterdrehen der Welle und der Wälzlager des Antriebs zur Vermeidung von Stillstandsmarken erreicht.

Die Unteransprüche zeigen bevorzugte Weiterbildungen der Erfindung.

Gemäß einer weiteren bevorzugten Ausgestaltung der Erfindung umfasst die Antriebsanordnung einen Zufallsgenerator, welcher der Steuereinheit einen Wert mit festen oder verteilten Vorgaben für einen weiterzudrehenden Drehwinkel vorgibt. Hierdurch wird erreicht, dass infolge des zufällig erzeugten Drehwinkels immer eine andere Stillstandsposition des Wälzlagers erreicht wird.

Weiterhin bevorzugt weist die erfindungsgemäße Antriebsanordnung eine Kopplungsvorrichtung auf, die mit der Steuereinheit verbunden ist und zwischen der Welle des Antriebs und einer zweiten Welle angeordnet ist, um die Welle des Antriebs mit der zweiten Welle zu koppeln und zu entkoppeln. Ferner ist die Steuereinheit der Antriebsanordnung vorzugsweise so ausgelegt, dass die Kopplungsvorrichtung bei stillstehender Welle der Antriebsanordnung vor und nach der Ansteuerung des Antriebs angesteuert und betätigt wird. Hierdurch kann das Weiterdrehen der Welle und des darauf befestigten Wälzlagers im entkoppelten Zustand der Antriebsanordnung von einem mit der zweiten Welle verbundenen Drehelement ohne dessen Betätigung erfolgen. Die Kopplungsvorrichtung ist z. B. bei Stellantrieben für Doppelkupplungsgetriebe, elektrisch betätigten Lenkgetrieben oder ähnlichen Einsatzzwecken von Vorteil bzw. unabdingbar, um z. B. keine Verstellung des Getriebes auszulösen.

Darüber hinaus ist ein Verfahren zur Verhinderung des Eingrabens von Wälzkörpern in Laufringe von Wälzlagern einer Antriebsanordnung offenbart, das über eine Ansteuerung des Antriebs eine einfache Veränderung der Relativposition zwischen den Wälzkörpern und den Laufringen durch Verdrehen bei stillstehender Welle des Antriebs ermöglicht und dadurch eine beachtliche Verlängerung der Lebensdauer bzw. Verbesserung der Dauerhaltbarkeit der verwendeten Wälzlager erreicht. Die Ansteuerung des Antriebs durch die Steuereinheit erfolgt dabei nach Ablauf eines vorbestimmten Zeitintervalls.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine vereinfachte schematische Schnittdarstellung einer ersten Ausführungsform der erfindungsgemäßen Antriebsanordnung,
- Figur 2: eine vereinfachte schematische Schnittdarstellung einer zweiten Ausführungsform der erfindungsgemäßen Antriebsanordnung, und
- Figur 3: eine Schnittdarstellung des Wälzlagers von Figur 1 und 2.

### Ausführungsformen der Erfindung

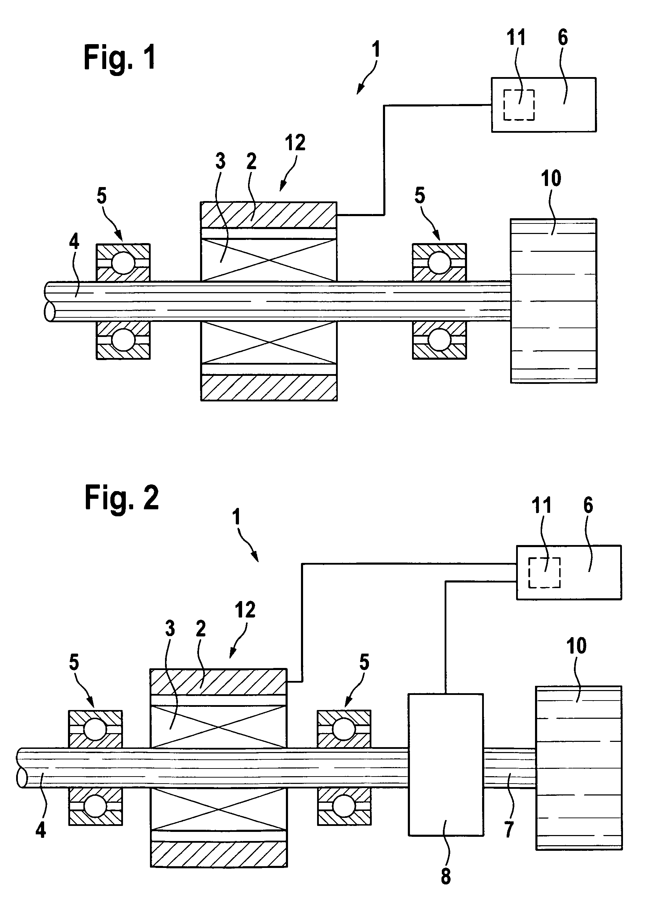

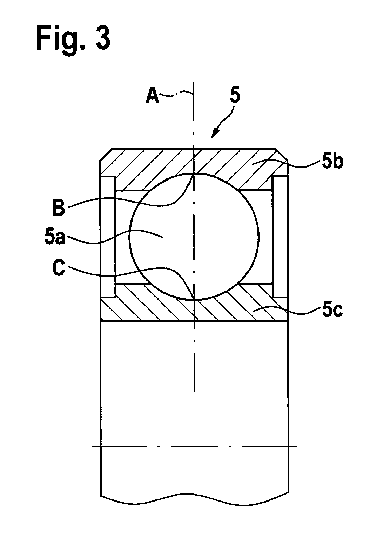

Nachfolgend wird unter Bezugnahme auf Figur 1 und 3 eine Antriebsanordnung 1 gemäß einem ersten bevorzugten Ausführungsbeispiel der Erfindung im Detail beschrieben.

Wie aus der vereinfachten schematischen Schnittdarstellung des ersten Ausführungsbeispiels der erfindungsgemäßen Antriebsanordnung 1 von Figur 1 ersichtlich ist, umfasst die Antriebsanordnung 1 eine Welle 4 und einen elektrischen Antrieb 12 mit einem Stator 2 und einem Rotor 3, der im Inneren des Stators 2 auf der Welle 4 angeordnet ist, die von Wälzlagern 5 abgestützt wird. Anstelle des hier dargestellten Antriebs 12 in Form eines EC-Motors ist insbesondere auch der Einsatz eines DC-Motors (bürstenbehafteten Motors) möglich.

Figur 3 zeigt eine Schnittdarstellung des in der Antriebsanordnung 1 von Figur 1 verwendeten Wälzlagers 5 mit im Inneren angeordneten Wälzkörpern 5a, sowie diese teilweise umschließenden äußeren und inneren Laufringen 5b und 5c. Bei der z. B. in einem Fahrzeug eingebauten Antriebsanordnung 1 treten Massenkräfte und Schwingungsbeanspruchen im Wesentlichen längs einer hier senkrecht dargestellten Achse A im Wälzlager 5 auf, die während des Stillstands des Wälzlagers 5 einen Einlaufeffekt bzw. Stillstandsmarken an einem Schnittpunkt B der Achse A mit dem äußeren Laufring 5b und dem Wälzkörper 5a und einem Schnittpunkt C der Achse A mit dem inneren Laufring 5c und dem Wälzkörper 5a verursachen. Die erfindungsgemäße Antriebsanordnung 1 verhindert das Eingraben des Wälzkörpers 5a in die äußeren und inneren Laufringe 5b und 5c dadurch, dass das Wälzlager 5 im Stillstand um einen kleinen Drehwinkel weitergedreht wird, um eine gleichmäßige Verteilung der Belastung und der Kontaktpositionen zwischen den Laufringen 5b, 5c und dem Wälzkörper 5a zu erreichen.

Wie aus Figur 1 ferner ersichtlich, ist eine Steuereinheit 6 mit dem Stator 2 des Antriebs 12 verbunden, um den Antrieb zu aktivieren und zu deaktivieren. Darüber hinaus umfasst die Antriebsanordnung 1 einen Zufallsgenerator 11, der in dieser Darstellung im Inneren der Steuereinheit 6 angeordnet ist, jedoch auch separat von der Steuereinheit 6 angeordnet sein kann. Der Zufallsgenerator 11 führt der Steuereinheit 6 einen zufällig ausgewählten Wert mit festen oder verteilten Vorgaben für den weiterzudrehenden Drehwinkel zu. Durch verteilte Vorgaben dieses Werts können der Beginn und das Ende der Verstellbewegung phasenverschoben werden. Vorzugsweise wird hier ein Winkel aus einem relativ kleinen Winkelbereich, bevorzugt zwischen 1 - 15°, vorgegeben. Ein Ende der Welle 4 der Antriebsanordnung 1 ist mit einem Drehelement 10 verbunden, das bei einem bevorzugten Ausführungsbeispiel z. B. insbesondere ein Flügelrad einer elektrischen Ölpumpe sein kann, das mit der Antriebsanordnung gekoppelt ist und um einen geringen Drehwinkel ohne eine Förderfunktion weitergedreht werden kann. Auf diese Weise ist die Vorrichtung zur Verhinderung des Eingrabens der Wälzkörper 5a in die Laufringe 5b, 5c der Wälzlager 5 in die normale Antriebsanordnung 1 für das Drehelement 10 integriert. Für bestimmte Einsatzzwecke bestehender Antriebsanordnungen ist vorzugsweise auch eine nachträgliche Umrüstung durch den Einbau dieser Vorrichtung möglich, um die Lebensdauer der eingebauten Lager zu verlängern.

In Figur 2 wird nun im Folgenden eine Antriebsanordnung 1 gemäß einem zweiten Ausführungsbeispiel der vorliegenden Erfindung beschrieben. Gleiche bzw. funktional gleiche Bauteile sind hier mit denselben Bezugszeichen wie im ersten Ausführungsbeispiel beschrieben.

Figur 2 zeigt das zweite Ausführungsbeispiel der Antriebsanordnung 1 ebenfalls in einer vereinfachten schematischen Schnittdarstellung. Im Gegensatz zum in Figur 1 dargestellten ersten Ausführungsbeispiel weist das zweite Ausführungsbeispiel von Figur 2 eine Kopplungsvorrichtung 8 auf, die zwischen der Welle 4 und einer zweiten Welle 7 angeordnet ist und mit der Steuereinheit 6 verbunden ist, um die Welle 4 mit der zweiten Welle 7 zu koppeln und zu entkoppeln. Auf diese Weise ist ein Weiterdrehen der Welle 4 im entkoppelten Zustand von der zweiten Welle 7 ermöglicht, ohne das mit der zweiten Welle 7 verbundene Drehelement 10 zu betätigen bzw. zu drehen.

Dieses Ausführungsbeispiel wird insbesondere bei Anwendungen verwendet, welche kein Verdrehen des Drehelements in der Stillstandsposition erlauben, z. B. bei Getrieben. Daher müssen vor dem Verdrehen der Welle 4 die beiden Wellen 4, 7 getrennt werden.

## Patentansprüche

1. Antriebsanordnung, umfassend:
- eine Welle (4), wobei die Welle (4) durch mindestens ein Wälzlager (5) mit einem inneren Laufring (5c), Wälzkörpern (5a) und einem äußeren Laufring (5b) drehbar gelagert ist,
- einen Antrieb (12), der die Welle (4) antreibt, und
- eine Steuereinheit (6), die mit dem Antrieb (12) verbunden ist, um den Antrieb (12) zu aktivieren und zu deaktivieren,
- wobei die Steuereinheit (6) ausgelegt ist, den Antrieb (12) bei stillstehender Welle (4) Kurzzeitig zur Drehung anzusteuern, um die Welle (4) um einen Drehwinkel weiterzudrehen, um eine Relativposition zwischen den Wälzkörpern (5a) und den Laufringen (5b, 5c) zu verändern,
**dadurch gekennzeichnet, dass**
- die Ansteuerung des Antriebs (12) durch die Steuereinheit (6) nach Ablauf eines vorbestimmten Zeitintervalls erfolgt.

2. Antriebsanordnung nach Anspruch 1, ferner umfassend einen Zufallsgenerator (11), welcher der Steuereinheit (6) einen Wert mit festen oder verteilten Vorgaben für den weiterzudrehenden Drehwinkel vorgibt.

3. Antriebsanordnung nach einem der vorhergehenden Ansprüche, ferner umfassend eine Kopplungsvorrichtung (8), die mit der Steuereinheit (6) verbunden ist und zwischen der Welle (4) und einer zweiten Welle (7) angeordnet ist, um die Welle (4) mit der zweiten Welle (7) zu koppeln und zu entkoppeln.

4. Antriebsanordnung nach Anspruch 3, wobei die Steuereinheit (6) ausgelegt ist, um die Kopplungsvorrichtung (8) vor und nach der Ansteuerung des Antriebs (12) anzusteuern.

5. Verfahren zur Verhinderung des Eingrabens von Wälzkörpern (5a) in Laufringe (5b, 5c) von Wälzlagern (5) einer Antriebsanordnung (1), das folgenden Schritt aufweist:
- Ansteuern eines Antriebs (12) durch eine Steuereinheit (6) bei einer stillstehenden Welle (4), um die Welle (4), an der das Wälzlager (4) angeordnet ist, um einen Drehwinkel weiterzudrehen, um eine Relativposition zwischen den Wälzkörpern (5a) und den Laufringen (5b, 5c) zu verändern,
**dadurch gekennzeichnet, dass**
- die Steuereinheit (6) den Antrieb (12) nach Ablauf eines vorbestimmten Zeitintervalls ansteuert.

6. Verfahren nach Anspruch 5, das ferner folgende Schritte aufweist:
- Ansteuern einer Kopplungsvorrichtung (8) durch die Steuereinheit (6) vor dem Schritt des Ansteuerns des Antriebs (12), um die Welle (4) von einer zweiten Welle (7) zu entkoppeln, und
- Ansteuern der Kopplungsvorrichtung (8) durch die Steuereinheit (6) nach dem Schritt des Ansteuerns des Antriebs (12), um die Welle (4) mit der zweiten Welle (7) wieder zu koppeln.

7. Verfahren nach Anspruch 5 oder 6, **dadurch gekennzeichnet, dass** ein Zufallsgenerator (11) der Steuereinheit (6) einen Wert mit festen oder verteilten Vorgaben für den weiterzudrehenden Drehwinkel vorgibt.

## Claims

1. Drive arrangement, comprising:
- a shaft (4), the shaft (4) being mounted rotatably by means of at least one rolling bearing (5) with an inner raceway (5c), with rolling bodies (5a) and with an outer raceway (5b),
- a drive (12) which drives the shaft (4), and
- a control unit (6) which is connected to the drive (12) in order to activate and deactivate the drive (12),
- the control unit (6) being designed to activate the drive (12) briefly in rotation when the shaft (4) is stationary, in order to rotate the shaft (4) further through an angle of rotation, in order to vary a relative position between the rolling bodies (5a) and the raceways (5b, 5c),
**characterized in that**
- the activation of the drive (12) by the control unit (6) takes place after a predetermined time interval has elapsed.

2. Drive arrangement according to Claim 1, furthermore comprising a random number generator (11) which stipulates to the control unit (6) a value having fixed or distributed instructions for the angle of rotation to be rotated further.

3. Drive arrangement according to one of the preceding claims, furthermore comprising a coupling device (8) which is connected to the control unit (6) and is arranged between the shaft (4) and a second shaft (7), in order to couple and decouple the shaft (4) to and from the second shaft (7).

4. Drive arrangement according to Claim 3, the control unit (6) being designed to activate the coupling device (8) before and after the activation of the drive (12).

5. Method for preventing rolling bodies (5a) from digging into raceways (5b, 5c) of rolling bearings (5) of a drive arrangement (1), which has the following step:
- activation of a drive (12) by a control unit (6) when a shaft (4) is stationary, in order to rotate the shaft (4), on which the rolling bearing (4) is arranged, further through an angle of rotation, in order to vary a relative position between the rolling bodies (5a) and the raceways (5b, 5c),
**characterized in that**
- the control unit (6) activates the drive (12) after a predetermined time interval has elapsed.

6. Method according to Claim 5, which has, furthermore, the following steps:
- activation of a coupling device (8) by the control unit (6) before the step of activating the drive (12), in order to decouple the shaft (4) from a second shaft (7), and
- activation of the coupling device (8) by the control unit (6) after the step of activating the drive (12), in order to couple the shaft (4) to the second shaft (7) again.

7. Method according to Claim 5 or 6, **characterized in that** a random number generator (11) of the control unit (6) stipulates a value having fixed or distributed instructions for the angle of rotation to be rotated further.

## Revendications

1. Agencement d'entraînement, comprenant :
- un arbre (4), l'arbre (4) étant supporté à rotation par au moins un palier à roulement (5) ayant une bague de roulement interne (5c), des corps de roulement (5a) et une bague de roulement externe (5b),
- un entraînement (12) qui entraîne l'arbre (4), et
- une unité de commande (6) qui est reliée à l'entraînement (12) afin d'activer et de désactiver l'entraînement (12),
- l'unité de commande (6) étant conçue pour commander l'entraînement (12) brièvement en rotation lorsque l'arbre (4) est immobile, afin de continuer de faire tourner l'arbre (4) d'un certain angle de rotation afin de modifier une position relative entre les corps de roulement (5a) et les bagues de roulement (5b, 5c),
**caractérisé en ce que**
- la commande de l'entraînement (12) s'effectue par l'unité de commande (6) après l'écoulement d'un intervalle de temps prédéterminé.

2. Agencement d'entraînement selon la revendication 1, comprenant en outre un générateur de randomisation (11) qui prédéfinit pour l'unité de commande (6) une valeur avec des prescriptions fixes ou réparties pour l'angle de rotation devant être varié pour continuer la rotation.

3. Agencement d'entraînement selon l'une quelconque des revendications précédentes, comprenant en outre un dispositif d'accouplement (8) qui est relié à l'unité de commande (6) et qui est disposé entre l'arbre (4) et un deuxième arbre (7) afin d'accoupler et de désaccoupler l'arbre (4) et le deuxième arbre (7).

4. Agencement d'entraînement selon la revendication 3, dans lequel l'unité de commande (6) est conçue pour commander le dispositif d'accouplement (8) avant et après la commande de l'entraînement (12).

5. Procédé pour empêcher l'incrustation de corps de roulement (5a) dans des bagues de roulement (5b, 5c) de paliers à roulement (5) d'un agencement d'entraînement (1), présentant l'étape suivante :
- commande d'un entraînement (12) par une unité de commande (6) lorsqu'un arbre (4) est immobile, afin de continuer de faire tourner l'arbre (4) sur lequel est disposé le palier à roulement (4) suivant un certain angle de rotation, afin de modifier une position relative entre les corps de roulement (5a) et les bagues de roulement (5b, 5c),
**caractérisé en ce que**
- l'unité de commande (6) commande l'entraînement (12) après l'écoulement d'un intervalle de temps prédéterminé.

6. Procédé selon la revendication 5, présentant en outre les étapes suivantes :
- commande d'un dispositif d'accouplement (8) par l'unité de commande (6) avant l'étape de commande de l'entraînement (12), afin de désaccoupler l'arbre (4) d'un deuxième arbre (7), et
- commande du dispositif d'accouplement (8) par l'unité de commande (6) après l'étape de commande de l'entraînement (12), afin de réaccoupler l'arbre (4) au deuxième arbre (7).

7. Procédé selon la revendication 5 ou 6, **caractérisé en ce qu'**un générateur de randomisation (11) prédéfinit pour l'unité de commande (6) une valeur avec des prescriptions fixes ou réparties pour l'angle de rotation devant être varié pour continuer la rotation.
